# EUROPEAN PATENT APPLICATION

(11) **EP 4 379 920 A1**
(43) Date of publication of application: **05.06.2024**
(21) Application number: 22210403.6
(22) Date of filing: 30.11.2022
(51) Int. Cl.: H01M 50/204, H01M 50/507, H01M 50/514, H01M 50/519

(54) **BATTERY SYSTEM AND METHOD OF ASSEMBLING THEREOF**

(71) Applicant: Samsung SDI Co., Ltd., Yongin-si, Gyeonggi-do 17084 (KR)
(72) Inventor: Ridisser, Markus, 8141 Premstätten (AT)
(74) Representative: Gulde & Partner

(57) **Abstract**

The present disclosure refers to a battery system (100) and a method of assembling a battery system (100). The battery system comprises a battery pack (10) including a plurality of battery cells with electrode terminals; and a cell contacting unit, CCU, (12) disposed on the battery pack (10). The CCU (12) comprises an electrically isolating carrier (14) at least covering the terminals of the battery cells, a plurality of busbars (16) electrically connecting the terminals of the battery cells and measuring means for detecting at least one physical property of the battery cells. The busbars (16) and the measuring means are arranged on a first side of the carrier (14) facing the battery cells and the carrier (14) comprises a plurality of access openings (18) for providing access to the busbars (16) from a second side of the carrier (14) opposite to the first side. The access openings (18) of the carrier (14) are closed by an adhesive.

## Description

### Field of the Disclosure

The present disclosure relates to a battery system comprising a battery pack and a cell contacting unit and to a method of assembling a battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of an electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as a power supply for small electronic devices, such as cellular phones, notebook computers and camcorders, while high-capacity rechargeable batteries are used as a power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or cells connected in series that are connected in parallel (*XsYp*)*.*

A battery pack is a set of any number of (generally identical) battery modules. They may be configured in a series, parallel or a mixture of both to deliver the desired voltage, capacity, or power density. Components of battery packs include the individual battery modules, and the interconnects, which provide electrical conductivity between them.

The integration of such a battery pack requires appropriate mechanical and electrical connections between the individual components, e.g. of battery modules. These connections must remain functional and save during the average service life of the battery system. Further, installation space and interchangeability requirements must be met, especially in mobile applications.

Battery systems according to the prior art usually comprise a plastic carrier equipped with electrical components and arranged on a battery pack. Cell voltages and temperatures are led to a central or decentral battery management module (BMM) via a cable. In order to provide protection, another component such as a touch protection covering all electrical components must also be installed. Consequently, there are many individual components which must be assembled through several steps on the assembly line so that the assembly procedure proves burdensome.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system comprises a battery pack including a plurality of battery cells with electrode terminals, and cell contacting unit (CCU) disposed on the battery pack. The CCU comprises an electrically isolating carrier at least covering the terminals of the battery cells, a plurality of busbars electrically connecting the terminals of the battery cells and measuring means for detecting at least one physical property of the battery cells. The busbars and the measuring means are arranged on a first side of the carrier facing the battery cells. Further, the carrier comprises a plurality of access openings for providing access to the busbars from a second side of the carrier opposite to the first side. The access openings of the carrier are closed by an adhesive.

According to another aspect of the present disclosure, the features of the battery system according to which the carrier comprises a plurality of access openings for providing access to the busbars from a second side of the carrier opposite to the first side and according to which the access openings of the carrier are closed by an adhesive are replaced with the features according to which the CCU further comprises at least one plug extending through the carrier from the first side to a second side opposite to the first side of the carrier and electrically connected to the measuring means and at least one battery management module (BMM) is arranged on the second side and is electrically connected to the measuring means via the at least one plug.

Yet another aspect of the present disclosure refers to an alternative of the battery system according to which the features of the carrier comprising a plurality of access openings for providing access to the busbars from a second side of the carrier opposite to the first side and of the access openings of the carrier being closed by an adhesive are replaced with the features according to which the carrier includes a first section having a corrugated shape with elevations and at least one depression, wherein the elevations accommodate degassing channels arranged between the carrier and the battery cells.

According to another aspect of the present disclosure, a method for assembling a battery system is described. In one step, a battery pack including a plurality of battery cells with electrode terminals is provided. Further a cell contacting unit (CCU) is disposed on the battery pack. The CCU comprises an electrically isolating carrier at least covering the terminals of the battery cells, a plurality of busbars for electrically connecting the terminals of the battery cells and measuring means for detecting at least one physical property of the battery cells. The plurality of busbars and the measuring means are arranged on a first side of the carrier facing the battery cells. The carrier comprises a plurality of access openings for providing access to the busbars from a second side of the carrier opposite to the first side. In a further step, the terminals of the battery cells and the plurality of busbars are electrically connected via the access provided by the access openings and an adhesive is applied onto or into the access openings of the carrier.

Yet another aspect of the present disclosure refers to a method for assembling a battery system is described. In one step, a battery pack including a plurality of battery cells with electrode terminals is provided. Further a cell contacting unit (CCU) is disposed on the battery pack. The CCU comprises an electrically isolating carrier at least covering the terminals of the battery cells, a plurality of busbars for electrically connecting the terminals of the battery cells and measuring means for detecting at least one physical property of the battery cells. The plurality of busbars and the measuring means are arranged on a first side of the carrier facing the battery cells. The CCU further comprises at least one plug extending through carrier from the first side to a second side opposite to the first side of the carrier and electrically connected to the measuring means. In a further step, at least one battery management module (BMM) is arranged on the second side and is electrically connected to the measuring means via the at least one plug.

According to another aspect of the present disclosure, a method for assembling a battery system is described. In one step, a battery pack including a plurality of battery cells with electrode terminals is provided. Further a cell contacting unit (CCU) is disposed on the battery pack. The CCU comprises an electrically isolating carrier at least covering the terminals of the battery cells, a plurality of busbars for electrically connecting the terminals of the battery cells and measuring means for detecting at least one physical property of the battery cells. The plurality of busbars and the measuring means are arranged on a first side of the carrier facing the battery cells. The carrier includes a first section having a corrugated shape with elevations and at least one depression, wherein, by disposing the CCU on the battery pack, the elevations accommodate degassing channels arranged between the carrier and the battery cells. Optional features described in view of one aspect of the present disclosure may be interchangeably used for other aspects of the present disclosure. The advantages described with the optional features applies analogously. A recurring description thereof is therefore omitted.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of a rear side of a CCU according to an embodiment in an unassembled state;
- Fig. 2: illustrates a schematic view of the rear side of the CCU of Fig. 1 in an assembled state;
- Fig. 3: illustrates a perspective view of a battery system according to an embodiment showing a front side of the CCU of Fig. 2; and
- Fig. 4: illustrates a flow chart of a method according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system comprises a battery pack including a plurality of battery cells with electrode terminals, and cell contacting unit (CCU) disposed on the battery pack. The CCU comprises an electrically isolating carrier at least covering the terminals of the battery cells, a plurality of busbars electrically connecting the terminals of the battery cells and measuring means for detecting at least one physical property of the battery cells. The busbars and the measuring means are arranged on, preferably fixed to, a first side of the carrier facing the battery cells. Further, the carrier comprises a plurality of access openings for providing access to the busbars from a second side of the carrier opposite to the first side. The access openings of the carrier are closed by an adhesive.

In other words, the CCU disposed on the battery pack combines multifunctional uses provided by a single component.

Firstly, according to the battery pack according to the present disclosure, the mounting of the busbars and the measuring means on the first side of the carrier (e.g. by welding or soldering) and the providing of the access openings to the carrier (e.g. by drilling, laser and/or chemical etching or the like) can be carried out in advance. Therefore, the CCU can be subjected to preassembly. Preassembled CCUs facilitate transportation and the packaging thereof. Furthermore, the assembly process can be streamlined by mounting the CCU on the battery pack as a multifunctional component instead of mounting several components individually each fulfilling a different function. Moreover, the access openings of the carrier allow access to the busbars from the second side of the carrier. That is, the busbars may be easily connected to the terminals of the battery pack through the access provided by the access openings (e.g. by welding). Therefore, the mounting of the CCU on the battery pack may be further facilitated. Advantageously, the production assembly steps and the welding spots can be reduced and additional sources of error can be excluded. It is, however, to be understood that the mounting is not limited to the described components and there may also be other components to be mounted on the CCU in advance in order to analogously achieve the described technical advantages.

Secondly, due to the electrically isolated carrier covering at least the terminals of the battery cells, the CCU provides the function of a touch protection for the electronic components such as the terminals and the busbars, while electrically isolating the electronic components from the second side of the carrier. After the busbars have been electrically connected to the terminals, the access openings are closed (or covered) by an adhesive. The adhesive also provides electrical isolation in order to establish a complete and continuous touch protection along the second side of the carrier. The adhesive may be implemented as glue tabs, in particular applied on the carrier covering the access openings. Alternatively or additionally, a liquid adhesive, a liquified adhesive and/or a flowable adhesive may be filled into the opening which then solidifies or is solidified in the opening. In other words, the carrier and the adhesive closing the access openings act as an electrical isolation shielding from the electronic components of the battery pack and the CCU.

It is apparent to a skilled person that the plurality of busbars may be divided into different groups (e.g. by a specified arrangement thereof such as in rows, for example), wherein at least one first group of busbars is configured to electrically connect positive electrodes of the battery cells and at least one second group of busbars is configured to electrically connect negative electrodes of the battery cells. The carrier may comprise one access opening for each group of busbars or one access opening for each busbar or a combination thereof. The electrical connections or interconnections described herein may be realized by wires or conducting elements, e.g. on a printed circuit board (PCB) or another kind of circuit carrier. The conducting elements may comprise metallization, e.g. surface metallization and/or pins, and/or may comprise conductive polymers or ceramics. Each of the groups of busbars may be electrically connected via flat flexible cables (FFC) to one or more circuit boards such as a collector board. The FFCs and the circuit board(s) may also be arranged on, preferably fixed to, the first side of the carrier, in particular by welding or soldering and preferably in advance to the assembling of the battery system.

The measuring means may be configured to detect at least one physical property of the battery cells. The physical property to be detected may be, for example, a temperature, a voltage, a current, an electrical power or the like. It is apparent to a skilled person, how the measuring means may be implemented in order to detect the at least one physical property and, thus, a corresponding detailed discussion thereof is omitted.

The battery system may further include a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. Operation outside the safe operating area may be indicated in case of over-current, over-voltage (during charging), over-temperature, under-temperature, over-pressure, and ground fault or leakage current detection.

According to one embodiment, the battery system may further comprise at least one battery management module (BMM) arranged on, preferably fixed to, the second side of the carrier. In particular, the battery system may comprise a plurality of BMMs. BMMs may be part of the system's battery modules and may be configured to obtain and to process relevant information on module level. That is, the BMM may be configured to detect, for example, the individual cell voltages and temperatures of the battery cells in a battery module. As the second side of the carrier faces away from the battery pack, the arrangement of the BMM(s) on the second side of the carrier facilitates assembly, repair and maintenance of the battery system, in particular of the BMMs.

According to another embodiment, the carrier may include a first section having a corrugated shape with elevations and at least one depression, preferably a plurality of depressions, wherein the elevations accommodate degassing channels arranged between the carrier and the battery cells. The at least one depression, preferably each of the depressions, may be located to adjoin at least one elevation, preferably located between two elevations. The carrier may also include a second section or a plurality of sections having a similar corrugated shape as the first section in order to increase the number of degassing channels. Degassing channels facilitate the discharge of gas to the outside such that the internal pressure of the battery system may not increase to a point at which the stability of the battery system is deteriorating. In other words, the shape of the section(s) of the carrier having the corrugated shape is adapted to constitute, together with a surface of the battery cells, the shape of degassing channels without requiring separate components for constructing degassing channels. Thus, assembling of the battery system may be further facilitated.

The battery system may further comprise at least one BMM, for example the above-mentioned BMM, accommodated in the at least one depression. This allows a compact arrangement of the at least one BMM in the battery system without requiring additional space or effort when assembling or repairing the battery system, Furthermore, when the at least one depression adjoins at least one elevation, the BMM is directly located next to at least one degassing channel which is accommodated in the at least one elevation.

The CCU may further comprise at least one plug extending through carrier from the first side to the second side and electrically connected to the measuring means, wherein the at least one BMM is electrically connected to the measuring means via the at least one plug. In particular, the BMM arranged on the second side of the carrier and/or in the depression may be directly plugged to the plug in order establish an electrical connection between the BMM and the measuring means arranged on the first side of the carrier.

According to another embodiment, a shape of the carrier may correspond to at least a base of the plurality of battery cells. In other words, the carrier may be shaped so as to cover an entire surface of the battery cells and/or the battery pack facing the first side of the carrier. By entirely covering the battery cells and/or the battery pack in one direction, a complete touch protection may be achieved.

According to another embodiment, the arrangement of the access openings corresponds to the arrangement of the terminals of the battery cells, when the CCU is disposed on the battery pack. In other words, there may be provided an access opening for each terminal of the battery cell. This reduces the amount of adhesive necessary for providing electrical shielding, while providing sufficient space for accessing the busbars.

According to another aspect of the present disclosure, an electric vehicle comprises the battery system as disclosed herein. The advantages set forth in view of the battery system can be analogously achieved by the electric vehicle. A recurring description thereof is therefore omitted.

According to yet another aspect of the present disclosure, there is provided a method for assembling a battery system. The battery system may be the battery system as disclosed herein. According to the method, a battery pack including a plurality of battery cells with electrode terminals is provided. Further a cell contacting unit (CCU) is disposed on the battery pack. The CCU comprises an electrically isolating carrier at least covering the terminals of the battery cells, a plurality of busbars for electrically connecting the terminals of the battery cells and measuring means for detecting at least one physical property of the battery cells. The plurality of busbars and the measuring means are arranged on, preferably fixed to, a first side of the carrier facing the battery cells. The carrier comprises a plurality of access openings for providing access to the busbars from a second side of the carrier opposite to the first side. In a further step, the terminals of the battery cells and the plurality of busbars are electrically connected via the access provided by the access openings and an adhesive is applied onto or into the access openings of the carrier.

The advantages set forth in view of the battery system and its optional features can be analogously achieved by the method for assembling a battery system and its optional features. A recurring description of the advantages is therefore omitted.

According to an embodiment of the present disclosure, at least one battery management module (BMM) may be arranged on, preferably fixed to, the second side of the carrier and the method may further comprise the step of electrically connecting the BMM with the measuring means.

According to another embodiment of the present disclosure, the carrier may include a first section having a corrugated shape with elevations and at least one depression, wherein, by disposing the CCU on the battery pack, the elevations may accommodate degassing channels arranged between the carrier and the battery cells.

At least one BMM, for example the above-mentioned BMM, may be accommodated in the at least one depression. Alternatively, the method may comprise the step of arranging at least one BMM, for example the above-mentioned BMM, in the at least one depression.

The CCU may further comprise at least one plug extending from the first side to the second side of the carrier and electrically connected to the measuring means and wherein the at least one BMM is electrically connected to the measuring means via the at least one plug or, alternatively, the method may further comprise the step of electrically connecting the at least one BMM to the measuring means via the at least one plug.

According to another embodiment, a shape of the carrier may correspond to at least a base of the plurality of battery cells. In other words, the carrier may be shaped so as to cover an entire surface of the battery cells and/or the battery pack facing the first side of the carrier. By entirely covering the battery cells and/or the battery pack in one direction, a complete touch protection may be achieved.

According to another embodiment, the arrangement of the access openings may correspond to the arrangement of the terminals of the battery cells, when the CCU is disposed on the battery pack.

### Specific Embodiments

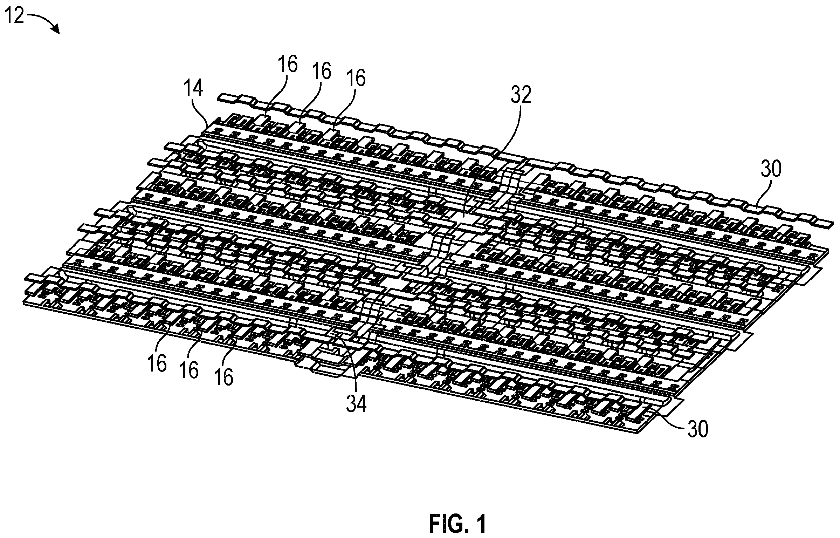

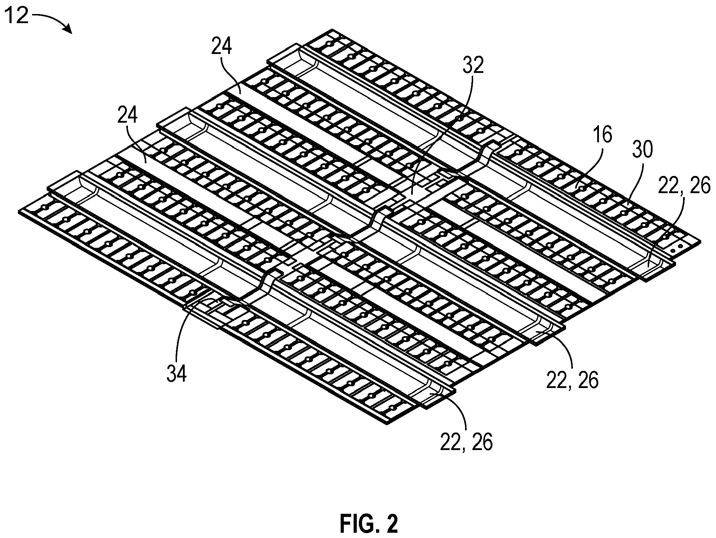

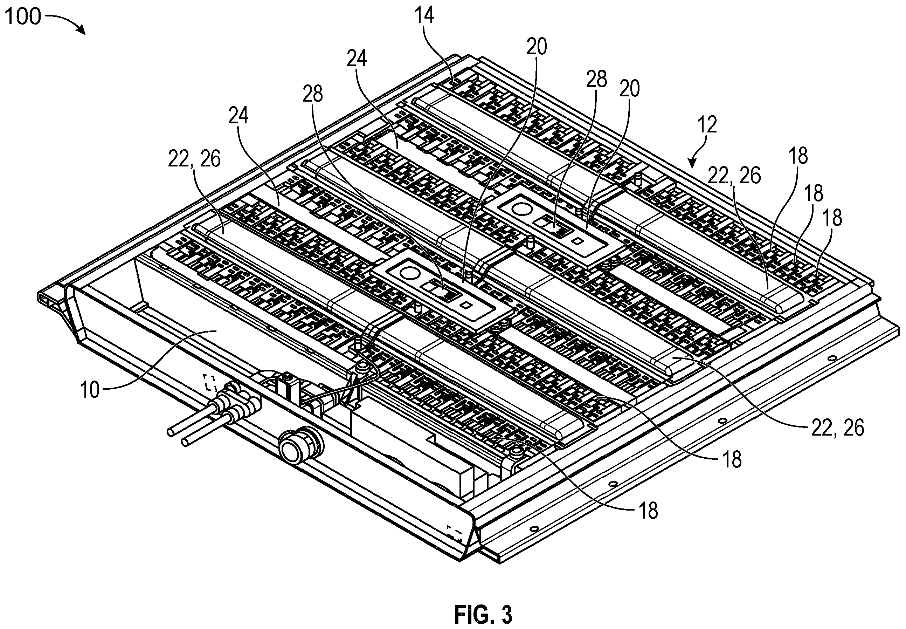

Figs. 1 and 2 are schematic views of a rear side of a cell contacting unit (CCU) 12 according to an embodiment illustrating the CCU 12 in an unassembled state (Fig. 1) and in an assembled state (Fig. 2). The CCU 12 may be disposed on a battery pack 10 including a plurality of battery cells with electrode terminals in order to constitute a battery system, for example the battery system 100 illustrated in Fig. 3. The CCU 12 disposed on the battery pack 10 provides multifunctional uses combined by or implemented via a single component.

Fig. 1 depicts the rear side (a first side) of the CCU 12 comprising an electrically isolating carrier 14 and several components - such as a plurality of busbars 16, a plurality of flat flexible cables (FFC) 30, a plurality of long collector boards 32 and a plurality of short collector boards 34 - which are to be mounted on a rear side (a first side) of the carrier 14. The rear side is a side of the CCU 12 facing the battery pack 10, when the CCU 12 is disposed on the battery pack 10. In order to improve the intelligibility, the components to be mounted on the rear side of the carrier 14 are shown in a configuration such that they are lifted above their designated places on the carrier 14 (cf. the assembled state of the CCU 12 as shown in Fig. 2). According to the present disclosure, the mounting of the components on the rear side of the carrier 14 can be carried out in advance. Therefore, the CCU 12 can be subjected to preassembly. Preassembled CCUs facilitate transportation and the packaging thereof. Furthermore, the assembly process of a battery system, for example the battery system 100 according to Fig. 3, can be streamlined by mounting the CCU 12 on the battery pack 10 as a multifunctional component instead of mounting several components individually each fulfilling a different function.

The carrier 14 is shaped such as to cover the battery cells of the battery pack 10 on the side where the terminals are located. In other words, the carrier 14 entirely covers the top side of the battery pack 10 as shown in Fig. 3. Due to the shape of the carrier 14, the CCU 12 provides the function of a touch protection for the components arranged on the rear side of the carrier 14, when the CCU 12 is disposed on the battery pack 10. As a result, the components mounted on the rear side of the carrier 14 and the terminals of the battery cells are electrically isolated from a front side (a second side opposite to the first side) of the carrier 14.

The shape of the carrier 14 is rectangular. The carrier 14, however, is not limited to the rectangular shape. The carrier 14 may also be of any other kind of shape, for example, square-shaped, ellipsoidal-shaped or circular-shaped. For example, the carrier 14 has a shape that is adapted to or corresponds to the shape of the battery pack 10 such as a base structure of the battery pack 10.

The busbars 16 are arranged on the rear side of the carrier 14 such that an electrical connection between the terminals of the battery cells can be established, when the CCU 12 is disposed on the battery pack 10. The busbars 16 are arranged in a row-shaped manner. The carrier 14 depicted in Figs. 1 and 2 comprises six rows of busbars 16, wherein three rows of busbars 16 are arranged to electrically connect positive electrodes of the terminals of the battery cells and three rows of busbars are arranged to electrically connect negative electrodes of the terminals of the battery cells. It may be understood that this arrangement is merely exemplary and that the arrangement of the busbars 16 on the carrier 14 is generally dependent on the arrangement and shape of the battery cells and their terminals used in the battery pack 10.

Each row of busbars 16 is contacted via the FFC 30 mounted on the busbars 16 along the direction of the row. The FFCs 30 have a corrugated shape in order to properly fit into gaps between the busbars 16 in a space-saving manner. The FFCs 30 are electrically connected to the long collector boards 32 and/or the short collector boards 34 mounted on the rear side of the carrier 14. The collector boards 32, 34 are arranged orthogonally to the FFCs 30, thereby providing an electrical connection of the rows of busbars 16, in particular of adjacent rows of busbars 16. The components such as the busbars 16, the FFCs 30 and the collector boards 32, 34 are fixedly mounted on the rear side of the carrier 14 by welding or soldering (cf. Fig. 2) in order to realize a preassembled CCU 12 capable of being easily assembled with the battery pack in a production assembly line.

The CCU 12 further comprises measuring means (not shown) which are configured to detect at least one physical property of the battery cells. The physical property to be detected is a temperature of the battery cells. The physical property to be detected may, however, also be a voltage, a current, an electrical power or any combination thereof. It is apparent to a skilled person, how the measuring means may be implemented in order to detect the at least one physical property and a corresponding detailed discussion thereof is omitted.

As best seen in Figs. 2 and 3, the carrier 14 has a corrugated shape with three elevations 22 and four depressions 24 in parallel to the rows of busbars 16. The elevations 22 and the depressions 24 are arranged in an alternating manner. When the CCU 14 is disposed on the battery pack 10 (cf. Fig. 3), each of the elevations 22 accommodate a degassing channel 26 arranged between the carrier 14 and the battery cells of the battery pack 10. Degassing channels 26 facilitate the discharge of gas to the outside such that the internal pressure of the battery system 100 may not increase to a point at which the stability of the battery system 100 is deteriorating. According to the embodiment of the battery system 100 as shown in Fig. 3, there is no separate component necessary for constructing degassing channels 26 such as pipe made of steel, for example. Thus, assembling of the battery system 100 may be facilitated. It is to be understood that the number of elevations 22 and depressions 24 is merely exemplary and not limited to the number as described with this embodiment. The carrier 14 may also merely a section or a plurality of sections having corrugated shapes with arbitrary numbers of elevations 22 and depressions 24.

Fig. 3 illustrates a perspective view of a battery system 100 according to an embodiment. The battery system 100 comprises the battery pack 10 and the CCU 12. The battery pack 10 is accommodated in a framework which is open to the top side in order to allow access to the top side of the battery pack 10 (in other words: the side of the battery pack 10 comprising the terminals). That is, the CCU 12 can be mounted on the battery pack 10 via the top side of the battery pack 10. A base structure of the framework corresponds to the base structure of the battery pack 10 such that a compact and space-saving battery system 100 may be achieved.

As best seen in Fig. 3, the carrier 14 comprises a plurality of access openings 18 for providing access to the busbars 16 from the front side of the carrier 14. Each of the busbars 16 is exposed to the front side of the carrier 14 via an access opening 18. The access openings 18 are provided to the carrier 14 in advance, e.g. by drilling, laser etching and/or chemical etching. Therefore, the access openings 18 are required to be provided into the carrier 14 during the assembling of the battery system 100, thereby facilitating the assembly procedure of the battery system 100. The access to the busbars 16 from the front side of the carrier 14 provided by the access openings 18 allows that the busbars 16 may be easily welded to the terminals of the battery cells of the battery pack 10 through the access openings 18 in order to electrically connect the terminals and the busbars 16 to each other.

After the busbars 16 have been welded to the terminals, the access openings 18 are closed by an electrically isolating adhesive. That is, the access openings 18 of the carrier 14 are closed by an electrically isolating adhesive (not shown). The adhesive provides electrical isolation to complete a continuous touch protection along the front side of the carrier 14. The adhesive is implemented as glue tabs each applied onto the carrier 14 and covering the access openings 18. Alternatively or additionally, a liquid adhesive, a liquified adhesive and/or a flowable adhesive may be filled into the opening which then solidifies in the access opening 18.

As further illustrated in Fig. 3, the battery system 100 further comprises two battery management modules (BMM) 20, each accommodated in one of the depressions 24 of the carrier 14. This allows a compact arrangement of the BMMs 20 in the battery system 100 without requiring additional space or effort when assembling or repairing the battery system 100. Furthermore, each of the BMMs 20 is directly located in between of two of the degassing channels 26.

The CCU 12 further comprises two plugs 28 extending through the carrier 14 from the rear side to the front side of the carrier 14. Each of the plugs 28 is electrically connected to the measuring means and to one of the BMMs 20 in order establish an electrical connection between the BMMs 20 and the measuring means arranged on different sides (rear and front sides) of the carrier 14. The BMMs 20 are configured to communicate with the measuring means via the electrical connection provided by the plugs 28. The communication includes a transmission of detected parameters of the physical property by the measuring means from the measuring means to the BMMs 20 such that the BMMs 20 are capable of processing relevant information on module level.

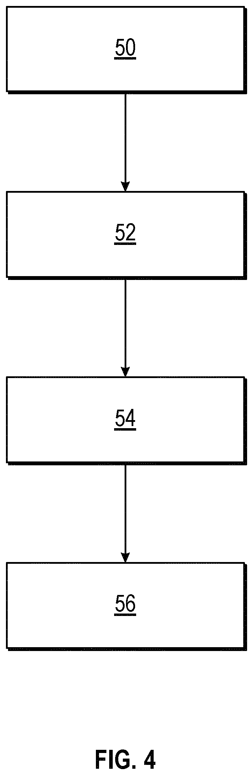

Fig. 4 illustrates a flow chart of a method for assembling a battery system according to an embodiment.

During a first step 50, a battery pack 10 including a plurality of battery cells with electrode terminals is provided. For example, the above-mentioned battery pack 10 may be provided.

A second step 52 of the method comprises disposing a cell contacting unit (CCU) 12 on the battery pack 10. The CCU 12 comprises an electrically isolating carrier 14 at least covering the terminals of the battery cells, a plurality of busbars 16 for electrically connecting the terminals of the battery cells and measuring means for detecting at least one physical property of the battery cells. The plurality of busbars 16 and the measuring means are arranged on a rear side of the carrier 14 facing the battery cells. The carrier 14 comprises a plurality of access openings 18 for providing access to the busbars 16 from a front side of the carrier 14. For example, the above-mentioned CCU 12 may be used.

In a third step 54, the terminals of the battery cells and the plurality of busbars 16 are electrically connected via the access provided by the access openings 18. For example, the busbars 16 are welded to the terminals.

During a fourth step 56, an adhesive is applied onto or into the access openings 18 of the carrier 14.

### Reference signs

- 10: battery pack
- 12: cell contacting unit
- 14: electrically isolating carrier
- 16: busbars
- 18: access openings
- 20: battery management module
- 22: elevations
- 24: depressions
- 26: degassing channels
- 28: plug
- 30: flat flexible cable
- 32: collector board, long
- 34: collector board, short
- 50: first method step
- 52: second method step
- 54: third method step
- 56: fourth method step
- 100: battery system

## Claims

1. A battery system (100), comprising:
a battery pack (10) including a plurality of battery cells with electrode terminals; and
a cell contacting unit, CCU, (12) disposed on the battery pack (10), the CCU (12) comprising an electrically isolating carrier (14) at least covering the terminals of the battery cells, a plurality of busbars (16) electrically connecting the terminals of the battery cells and measuring means for detecting at least one physical property of the battery cells;
wherein the busbars (16) and the measuring means are arranged on a first side of the carrier (14) facing the battery cells,
wherein the carrier (14) comprises a plurality of access openings (18) for providing access to the busbars (16) from a second side of the carrier (14) opposite to the first side, and
wherein the access openings (18) of the carrier (14) are closed by an adhesive.

2. The battery system (100) according to claim 1, further comprising at least one battery management module, BMM, (20) arranged on the second side of the carrier (14).

3. The battery system (100) according to any one of the preceding claims, wherein the carrier (14) includes a first section having a corrugated shape with elevations (22) and at least one depression (24), wherein the elevations (22) accommodate degassing channels (26) arranged between the carrier (14) and the battery cells.

4. The battery system (100) according to claim 3, wherein an or the at least one BMM (20) is accommodated in the at least one depression (24).

5. The battery system (100) according to claims 2 or 4, wherein the CCU (12) further comprises at least one plug (28) extending through the carrier (14) from the first side to the second side and electrically connected to the measuring means, wherein the at least one BMM (20) is electrically connected to the measuring means via the at least one plug (28).

6. The battery system (100) according to any one of the preceding claims, wherein a shape of the carrier (14) corresponds to at least a base of the plurality of battery cells.

7. The battery system (100) according to any one of the preceding claims, wherein the arrangement of the access openings (18) corresponds to the arrangement of the terminals of the battery cells, when the CCU (12) is disposed on the battery pack (10).

8. An electric vehicle comprising the battery system (100) according to any one of the preceding claims.

9. A method for assembling a battery system (100), wherein the method comprises the steps of:
a) providing a battery pack (10) including a plurality of battery cells with electrode terminals; and
b) disposing on the battery pack (10) a cell contacting unit, CCU, (12) comprising an electrically isolating carrier (14) at least covering the terminals of the battery cells, a plurality of busbars (16) for electrically connecting the terminals of the battery cells and measuring means for detecting at least one physical property of the battery cells, wherein the plurality of busbars (16) and the measuring means are arranged on a first side of the carrier (14) facing the battery cells and wherein the carrier (14) comprises a plurality of access openings (18) for providing access to the busbars (16) from a second side of the carrier (14) opposite to the first side;
c) electrically connecting the terminals of the battery cells and the plurality of busbars (16) via the access provided by the access openings (18); and
d) applying an adhesive onto or into the access openings (18) of the carrier (14).

10. The method according to claim 9, wherein at least one battery management module, BMM, (20) is arranged on the second side of the carrier (14) and the method further comprises the step of electrically connecting the BMM (20) with the measuring means.

11. The method according to claims 9 or 10, wherein the carrier (14) includes a first section having a corrugated shape with elevations (22) and at least one depression (24), wherein, by disposing the CCU (12) on the battery pack (10), the elevations (22) accommodate degassing channels (26) arranged between the carrier (14) and the battery cells.

12. The method according to claim 11, wherein at least one battery management module, BMM, (20) is accommodated in the at least one depression (24), or wherein the method further comprises the step of arranging at least one BMM (20) in the at least one depression (24).

13. The method according to claims 10 or 12, wherein the CCU (12) further comprises at least one plug (28) extending from the first side to the second side of the carrier (14) and electrically connected to the measuring means and wherein the at least one BMM (20) is electrically connected to the measuring means via the at least one plug (28) or wherein the method further comprises the step of electrically connecting the at least one BMM (20) to the measuring means via the at least one plug (28).

14. The method according to any one of claims 9 to 13, wherein a shape of the carrier (14) corresponds to at least a base of the plurality of battery cells.

15. The method according to any one of claims 9 to 14, wherein the arrangement of the access openings (18) corresponds to the arrangement of the terminals of the battery cells, when the CCU (12) is disposed on the battery pack (10).
